# EUROPÄISCHE PATENTSCHRIFT

(11) **EP 0 929 423 B1**
(45) Veröffentlichungstag und Bekanntmachung des Hinweises auf die Patenterteilung: **09.07.2003**
(21) Anmeldenummer: 98943661.3
(22) Anmeldetag: 09.07.1998
(51) Int. Cl.: B60S 1/38

(54) **WISCHBLATT FÜR SCHEIBEN VON KRAFTFAHRZEUGEN**
MOTOR VEHICLE WINDOW WIPER
RACLETTE D'ESSUIE-GLACE POUR VITRES DE VEHICULES AUTOMOBILES

(30) Priorität: 12.08.1997 DE 19734843
(43) Veröffentlichungstag der Anmeldung: 21.07.1999
(73) Patentinhaber: ROBERT BOSCH GMBH, 70442 Stuttgart (DE)
(72) Erfinder: KOTLARSKI, Thomas, D-77830 Bühlertal (DE); MERKEL, Wilfried, D-77876 Kappelrodeck (DE); LEUTSCH, Wolfgang, D-77830 Bühlertal (DE); SCHMIDT, Thomas, D-76530 Baden-Baden (DE)
(86) Internationale Anmeldenummer: DE9801895
(87) Internationale Veröffentlichungsnummer: WO99007586

(56) Entgegenhaltungen:
- DE-A- 2 839 587
- DE-B- 1 247 161
- FR-A- 2 199 302
- GB-A- 2 106 775

## Beschreibung

### Stand der Technik

Bei Wischblättern der im Oberbegriff des Anspruchs 1 bezeichneten Art soll das Tragelement über das gesamte vom Wischblatt bestrichene Wischfeld eine möglichst gleichmäßige Verteilung des vom Wischerarm ausgehenden Wischblatt-Anpreßdrucks an der Scheiben gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein, als die im Wischfeld an der zu wischenden Scheibe gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird (DE-A-15 05 397).

Bei einem bekannten Wischblatt (DE-C-12 47 161) kann einmal das Wischblatt bzw. dessen aus Gründen der Auflage-Druckverteilung im Wischblatt-Mittelbereich weit über die Wischleiste ragende Tragelement auf der dem Fahrtwind zugewandten Vorderseite unter dem Aufbau eines Überdrucks von diesem untergriffen werden. Andererseits baut sich auf der von dem Fahrtwind abgewandten Rückseite wegen der erwähnten Bauform ein erheblicher Unterdruck auf. Zwar verändert das im Betrieb meist eine Pendelbewegung ausführende Wischblatt seine Lage in bezug auf den anströmenden Fahrtwind ständig, doch ist auch dann stets seine eine Längsseite diesem mehr oder weniger stark zugewandt und wird deshalb auch als Vorderseite bezeichnet, während seine andere Längsseite demzufolge auch als Rückseite angesehen wird. Im Zusammenwirken dieser beiden vorerwähnten Drucke, die beide dem Wischblatt-Anpreßdruck entgegengerichtet sind, wird dieser bei höheren Fahrgeschwindigkeiten zumindest so verringert, daß kein ordnungsgemäßes Wischergebnis mehr möglich ist. Eine Verstärkung des Wischblatt-Anpreßdrucks gegen die Scheibe mag bei hohen Fahrgeschwindigkeiten zwar dieses Problem verkleinern, doch bei geringeren Fahrgeschwindigkeiten, wenn das Abhebebestreben verringert wird, erhöht sich aber die Reibung zwischen Wischblatt und Scheibe, was zu einer unerwünschten Geräuschbildung und zur unzulässig hohen Belastung der Antriebskomponenten und des Wischgummis führt.

Es sind ferner Wischblätter bekannt (DE-A-28 39 587), die ein Tragelement aufweisen mit einem kastenförmigen, mit einzelnen Kammern versehenen Aufbau. Zwischen den Kammern sind jeweils Nuten vorgesehen, die eine gewisse Biegung in der Zeichnungsebene zulassen. Innerhalb dieses Tragelements ist eine Federleiste angeordnet, die durch eine Spiralfeder federbelastet ist und eine gewisse Vorspannung erzeugt. Dieser komplexe Aufbau ist zum einen teuer und umständlich in der Montage und zum anderen unverhältnismäßig hoch für diese Art des Wischblattkonzeptes.

### Vorteile der Erfindung

Die Erfindung geht aus von einem Wischblatt nach der Gattung der DE-A-2 839 587).

Bei dem erfindungsgemäßen Wischblatt mit den kennzeichnenden Merkmalen des Anspruchs 1 wird über die dem Fahrtwind zugewandte Anströmfläche eine zur Scheibe gerichtete Kraftkomponente aufgebaut, welche dem Abhebebestreben der beiden Drucke entgegenwirkt und so für eine hervorragende Reinigungsqualität zumindest in dem für den Fahrzeuglenker wichtigen Bereich des vom Wischblatt überstrichenen Wischfeldes sorgt. Je nach Größe der Anströmfläche und/oder je nach Größe des Anstellwinkels α kann dieser Hilfs-Anpreßdruck den veränderlichen, vom Fahrzeugtyp abhängigen Forderungen angepaßt werden. Weiter ist bei der erfindungsgemäßen Lösung von Vorteil, daß der Anpreßdruck als Funktion der Fahrgeschwindigkeit mit dieser ansteigt oder abfällt. Es wird also nur dem bei großer Geschwindigkeit auftretenden störenden Abhebebestreben ein entsprechend großer "Hilfsanpreßdruck" entgegengesetzt.

Zwar ist es aus der DE-OS 15 05 397 bekannt an einem Wischblatt eine zur Scheibe geneigte, der Luftströmung zugewandten Seitenflanke der Wischleiste anzuordnen, doch ist das dort beschriebene Wischblatt mit dem schon erwähnten Tragbügelsystem ausgestattet, das eine hohe Bauweise bedingt und damit dem Abhebebestreben entgegenkommt. Dieses Tragbügelsystem bildet zusammen mit in der Wischleiste angeordneten Federschienen das Tragelement des Wischblatts, an welchem die Wischleiste gehalten ist.

Eine besonders einfache und kostengünstige Realisierung der Anströmfläche ergibt sich, wenn diese an der Wischleiste angeordnet ist.

Dies kann mit Vorteil beispielsweise dadurch erreicht werden, daß der Ansatz an eine Streifleiste der Wischleiste angeformt und/oder, daß der Ansatz an die Streifleiste der Wischleiste anextrudiert ist.

Die Flexibilität der Wischleiste bezüglich einer auf der Scheibe stehenden Ebene wird nicht oder nur unwesentlich beiträchtigt, wenn der Ansatz aus einem weicheren Material besteht als die Streifleiste. Unter Umständen kann es auch zweckdienlich sein, einen Ansatz aus einem härteren Material zu wählen, um die Stabilität des Wischblattes zu erhöhen.

Bei besonders problematischen Scheibenausgestaltungen kann eine im Querschnitt gesehen mit einer Hohlkrümmung versehende Anströmfläche zweckdienlich sein.

Montagetechnische Vorteile ergeben sich bei einer mehrteiligen Ausbildung des Tragelements.

Eine fertigungstechnisch einfache Lösung eines mehrteiligen Tragelements wird dadurch erreicht, daß dieses haarnadelförmig ausgebildet ist, wobei seine beiden zueinander parallelen, nadelartigen Schenkel an einem Ende durch einen Steg einstückig miteinander verbunden sind.

Zur Sicherung des haarnadelförmigen Tragelements an der Wischleiste sind die von dem Steg abgewandten anderen Enden der nadelartigen Schenkel durch ein Halteelement miteinander verbunden.

Weitere vorteilhafte Weiterbildungen und Ausgestaltungen der Erfindung sind in der nachfolgenden Beschreibung von zwei in der dazugehörigen Zeichnung dargestellten Ausführungsbeispielen angegeben.

### Zeichnung

In der Zeichnung zeigen:

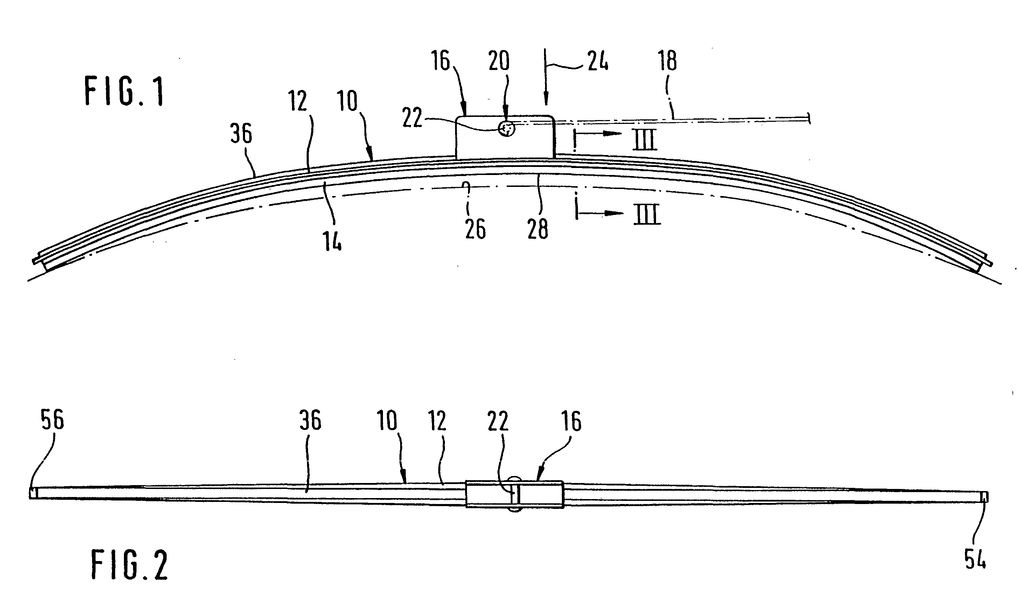

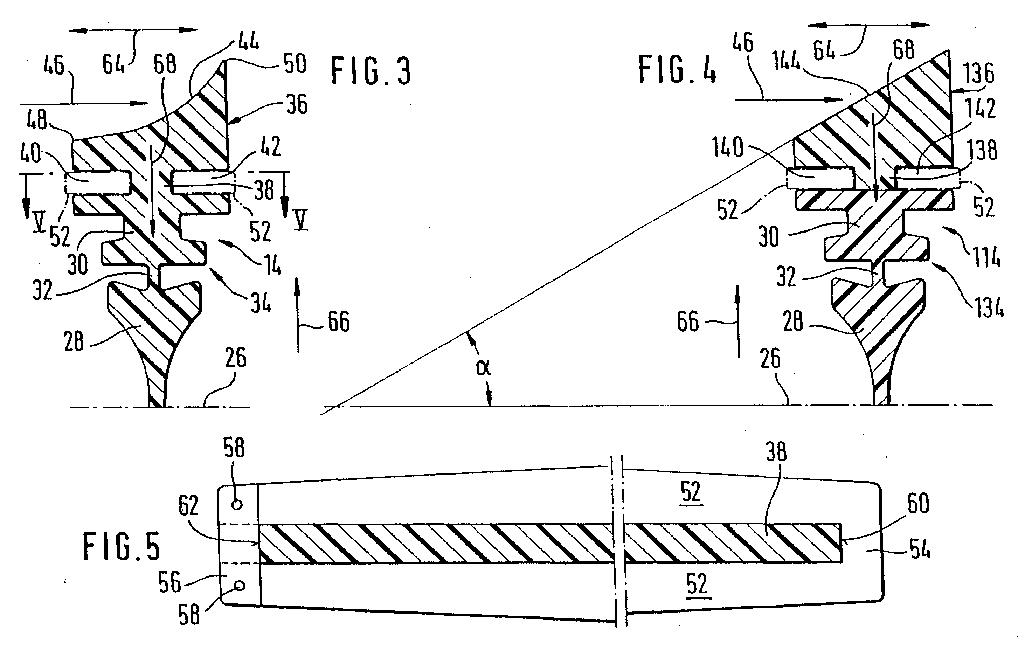

Figur 1 eine Seitenansicht eines erfindungsgemäßen Wischblatt, Figur 2 eine Draufsicht auf das Wischblatt gemäß Figur 1, Figur 3 einen Querschnitt durch eine erste Ausführung einer zum Wischblatt gehörenden Wischleiste entlang der Linie III-III in Figur 1 in vergrößerter Darstelluung, Figur 4 einen Querschnitt gemäß Figur 3 durch eine andere Ausführung der Wischleisten und Figur 5 eine Draufsicht auf ein zum Wischblatt gehörendes Tragelement in vergrößerter, verkürzter Darstellung.

### Beschreibung des Ausführungsbeispiels

Ein in den Figuren 1 und 2 dargestelltes Wischblatt 10 weist ein mehrteiliges, langgestrecktes, federelastisches Tragelement 12 auf, an dem eine langgestreckte, gummmielastische Wischleiste 14 längsachsenparallel befestigt ist. An der Oberseite des Tragelements ist eine Anschlußvorrichtung 16 angeordnet, mit deren Hilfe das Wischblatt 10 mit einem angetriebenen Wischerarm 18 lösbar verbunden werden kann. An dem freien Ende 20 des Wischerarms 18 ist ein als Gegenanschlußmittel dienender Haken angeformt, welcher einen zur Anschlußvorrichtung 16 des Wischblatts gehörenden Gelenkbolzen 22 umgreift. Die Sicherung zwischen dem Wischerarm 18 und dem Wischblatt 10 wird durch nicht näher dargestellte, an sich bekannte, als Adapter ausgebildete Sicherungsmittel übernommen. Der Wischerarm 18 und damit auch der Haken am Armende 20 ist in Richtung des Pfeiles 24 zur zu wischenden Scheibe belastet, deren zu wischende Oberfläche in Figur 1 durch eine strichpunktierte Linie 26 angedeutet ist. Da die strichpunktierte Linie 26 die stärkste Krümmung der Scheibenoberflächen darstellen soll ist klar ersichtlich, daß die Krümmung des mit seinen beiden Enden an der Scheibe anliegenden Wischblatts 10 stärker ist als die maximale Scheibenkrümmung. Unter dem Anpreßdruck (Pfeil 24) legt sich das Wischblatt mit seiner Wischlippe 28 über seine gesamte Länge an der Scheibenoberfläche 26 an. Dabei baut sich im bandartigen federelastischen Tragelement 12 eine Spannung auf, welche für eine ordnungsgemäße Anlage der Wischleiste 14 bzw. der Wischlippe 28 über deren gesamte Länge an der Kraftfahrzeugscheibe sorgt.

Im folgenden soll nun die besondere Ausgestaltung des Wischblatts, insbesondere der Wischleiste 14 näher erläutert werden. Bei der Ausführungsform der Erfindung gemäß Figur 3 besteht die Wischleiste 14 aus einem Grundkörper 30, an den über einen sogenannten Kippsteg 32 die an der Scheibenoberfläche 26 aufliegende Wischlippe 28 angeformt ist. Der Grundkörper 30 bildet zusammen mit dem Kippsteg 32 und der Wischlippe 28 eine sogenannte Streifleiste 34, die über ihre gesamte Längserstreckung einen gleichbleibenden Querschnitt aufweist. Auf der von der Wischlippe 28 abgewandten Seite des Grundkörpers 30 ist ein aus einem weicheren Material als die Streifleiste 34 bestehender Ansatz 36 mit dem Grundkörper 30 verbunden. Die Verbindung erfolgt über einen relativ schmalen Verbindungssteg 38 des Ansatzes 36, der zwischen zwei einander gegenüberliegenden, randoffenen Längsnuten 40 und 42 verbleibt. Oberhalb der beiden Längsnuten 40 und 42 also dort, wo sich der Ansatz wieder auf die Breite des Grundkörpers 30 erstreckt, ist auf der von der Scheibenoberfläche 26 abgewandten Seite eine Anströmfläche 44 ausgebildet, die wie hier im Querschnitt gesehen, eine den Fahrtwind (Pfeil 46) zugewandte Hohlkrümmung hat. Dabei liegt die in Richtung des Fahrtwindes (Pfeil 46) gesehen vorn liegende Kante 48 des Ansatzes 36 bzw. der Anströmfläche 44 näher an der zu wischenden Scheibenoberfläche 26 als die bezüglich des Fahrtwindes hinten liegende Kante 50. Es ergibt sich somit, daß eine Verbindungslinie über die beiden Kanten 48 und 50 mit der Scheibenoberfläche 26 einen spitzen Winkel von etwa 35° einschließt, der in Figur 4 mit α bezeichnet ist. Bei der Ausführungsform gemäß Figur 3 sind die verschiedenen Bereiche 28, 32, 30, 38 und 36 einstückig hergestellt, vorzugsweise extrudiert. Die Anströmfläche 44 hat dort am vorderen Bereich einen Anströmwinkel von etwa 10° und am hinteren Bereich von etwa 70°.

Bei der Ausführungsform gemäß Figur 4 ist der Grundaufbau der Wischleiste 114 von der Form her identisch mit dem Aufbau der Wischleiste 14 gemäß Figur 3. Deswegen sind in Figur 4 für die Wischlippe 28, den Grundkörper 30 und den Kippsteg 32 dieselben Bezugszahlen wie in Figur 3 verwendet worden. Abweichend von der Wischleiste 14 gemäß Figur 3 besteht der Ansatz 136 der Wischleiste 114 aus einem anderen Material als die Streifleiste 134. Bei der Wischleiste 114 gemäß Figur 4 erstreckt sich der Ansatz 136 mit einem Verbindungssteg 138 zum Grundkörper 30 und ist dort fest mit der von der Scheibenoberfläche 26 abgewandten Oberseite des Grundkörpers 30 verbunden. Dies kann beispielsweise durch eine sogenannte Mehrstoff-Extrusion erreicht werden, bei der hier die beiden Teilbereiche 136 und 134 der Wischleiste 114 separat extrudiert und sofort nach der Extrusion aneinander angelegt werden, so daß eine innige Verbindung zwischen dem Ansatz bzw. dessen Verbindungssteg 38 und dem Grundkörper 30 erreicht wird. Auch in diesem Fall ergeben sich durch die Höhe des Verbindungsstegs 38 zwei einander gegenüberliegende Längsnuten 140 und 142, weil die Breite des Verbindungsstegs 138 erheblich geringer ist als die Breite des Ansatzes 136. Weiter macht Figur 4 deutlich, daß der Ansatz 136 auf seiner vorn der Scheibenoberfläche 26 abgewandten Seite eine dachförmig abgeschrägte Anströmfläche 144 hat, die quer zu ihrer Längserstreckung gesehen mit der Scheibe einen spitzen Winkel α einschließt. Diese Anströmfläche 144 ist dem Fahrtwind (Pfeil 46) zugewandt.

Die Verbindung zwischen der Wischleiste 14 bzw. 114 und dem Tragelement 12 wird im folgenden anhand der Figur 5 erläutert. Das Tragelement 12 ist beim Ausführungsbeispiel zweiteilig ausgebildet. Sein Hauptteil hat die Form einer Haarnadel. Es hat somit zwei nadelartige, parallel zueinander und mit Abstand voneinander liegende nadelartige Schenkel 52, deren eine, einander benachbart liegende Schenkelenden durch einen Steg 54 einstückig miteinander verbunden sind. Dieses haarnadelförmige Hauptteil 52, 54 bildet das eigentliche Tragelement 12. Zur Stabilisierung der freien Enden der Schenkel 52 sind diese über separates Halteelement 56 brückenartig miteinander verbunden. Dadurch wird eine gute Stabilität des Tragelements 12 gewährleistet. Die Verbindung zwischen den Enden der Schenkel 52 und dem Halteelement 56 erfolgt an Bereichen 58 beispielsweise durch Punktschweißen, da beim Ausführungsbeispiel das Tragelement 12 mit seinen einzelnen Abschnitten 52, 54, 56 aus einem Federbandstahl hergestellt ist. Es ist jedoch auch denkbar, daß das gesamte Tragelement bzw. dessen einzelne Teile aus einem elastischen Kunststoff gefertigt werden. Der Abstand zwischen den beiden Schenkeln 52 entspricht der Breite des Verbindungsstegs 38 der Wischleisten 14 bzw. 114. Zur Montage wird das haarnadelförmige Tragelement 12 bei noch nicht aufgebrachtem Halteelement 56 mit seinen beiden Schenkeln 52 in Längsrichtung in die Längsnuten 40, 42 der Wischleiste 14 eingeschoben. Diese Montageposition ist in den Figuren 3 und 4 strichpunktiert angedeutet. Der Einschiebevorgang ist beendet, wenn der Steg 54 an der Stirnseite 60 des Verbindungsstegs 38 zur Anlage kommt. In dieser Position ragen die freien Enden der Schenkel 52 noch über die andere Stirnseite 62 des Verbindungsstegs 38 hinaus und bieten somit Montageflächen für das Halteelement 56 und Raum für die Befestigungsbereiche 58.

Wie die Figuren 2 bis 4 zeigen, ist das Tragelement 12 in seinem Mittelbereich etwas breiter als die Wischleiste 14 mit ihrem Ansatz 36 bzw. 136 und bietet somit Raum zum Befestigen der Anschlußvorrichtung 16.

Beiden Ausführungsbeispielen ist gemeinsam, daß das Wischblatt 10 mit einer sich in seiner Längsrichtung und im wesentlichen parallel zur Scheibe erstreckenden, dem Fahrtwind (Pfeil 46) zugewandten Anströmfläche 44 bzw. 144 versehen ist, die quer zu ihrer Längerstreckung gesehen mit der Scheibe einen spitzen Winkel α einschließt, der zwischen 10° und 70° liegt.

Zur Erläuterung der Wirkungsweise des erfindungsgemäßen Wischblatts wird nun auf die Figur 3 verwiesen. Während des Betriebs des Wischblatts, dessen Arbeitsbewegung durch den Doppelpfeil 64 angedeutet ist, wenn dieses mit seiner Wischleiste 14 über die Oberfläche 26 des Scheibe verschoben wird, befindet sich das Tragelement 12 in einer Ebene, welche im wesentlichen parallel zur Oberfläche 26 der Scheibe verläuft. Dabei erfährt das Wischblatt 10 einen Auflagedruck (Pfeil 24 in Figur 1), dem während des Betriebs des Wischblatts, insbesondere bei hohen Fahrgeschwindigkeiten, ein in Richtung des Pfeiles 66 wirkendes Abhebebestreben entgegengerichtet ist. Da die Anströmfläche 44 bzw. 144 der Wischleiste 14 bzw. 114 dem Fahrtwind 46 zugewandt ist, wobei sie mit der Oberfläche 26 der zu wischenden Scheibe einen spitzen Winkel α einschließt, erzeugt der Druck des Fahrtwindes 46 eine Kraftkomponente, die in den Figuren 3 und 4 durch einen Pfeil 68 dargestellt ist. Diese Kraftkomponente 68 wirkt dem Abhebebestreben (Pfeil 66) entgegen und hält somit den Auflagedruck (Pfeil 24) im vorschriftsmäßigen Bereich.

## Patentansprüche

1. Wischblatt (10) für Scheiben von Kraftfahrzeugen, mit einer an der zu wischenden Scheibe anlegbaren, langgestreckten, gummielastischen Wischleiste (14), die im wesentlichen längsachsenparallel an der einen, der Scheibe zugewandten Räche eines federelastischen Tragelements (12) angeordnet ist, welches mit einem quer zur Längserstreckung des Wischblatts angetriebenen, zur Scheibe belastbaren Wischerarm (18) verbunden und das Wischblatt (10) mit einer sich in seiner Längsrichtung und im wesentlichen parallel zur Scheibe erstreckenden, dem Fahrtwind (46) zugewandten Anströmfläche (44 bzw. 144) versehen ist, die quer zu ihrer Längserstreckung gesehen mit der Scheibe einen spitzen Winkel (α) einschließt und ferner die Wischleiste (14 bzw. 114) mit einem Ansatz (36 bzw. 136) das Tragelement in einer auf der Scheibe stehenden Ebene quert und wobei an dem langgestreckten, zum Tragelement (12) längsachsenparallelen Ansatz die Anströmfläche (44 bzw. 144) ausgebildet ist, **dadurch gekennzeichnet, dass** das Tragelement (12) bandartig ausgestaltet ist und die Wischleiste (14) einen Grundkörper (30) aufweist und dass die Verbindung vom Ansatz (36, 136) zum Grundkörper (30) über einen relativ schmalen Verbindungssteg (38) erfolgt, der zwischen zwei einander gegenüberliegenden, randoffenen Längsnuten (40, 42) für das Tragelement (12) verbleibt.

2. Wischblatt nach Anspruch 1, **dadurch gekennzeichnet, daß** die Anströmfläche (44 bzw. 144) an der Wischleiste (14) angeordnet ist.

3. Wischblatt nach Anspruch 1 oder 2, **dadurch gekennzeichnet, daß** der Ansatz (36 bzw. 136) an einer Streifleiste der Wischleiste (14 bzw. 114) angeformt ist.

4. Wischblatt nach Anspruch 3, **dadurch gekennzeichnet, daß** der Ansatz (136) an die Streifleiste (34) der Wischleiste (114) anextrudiert ist.

5. Wischblatt nach einem der Ansprüche 1 bis 4, **dadurch gekennzeichnet, daß** der Ansatz (136) aus einem anderen, insbesondere weicheren Material besteht als die Streifleiste (34).

6. Wischblatt nach einem der Ansprüche 1 bis 5, **dadurch gekennzeichnet, daß** die Anströmfläche (44) im Querschnitt gesehen eine dem Fahrtwind (46) zugewandte Hohlkrümmung hat.

7. Wischblatt nach einem der Ansprüche 1 bis 6, **dadurch gekennzeichnet**-, daß das Tragelement (12) mehrteilig ausgebildet ist.

8. Wischblatt nach einem der Ansprüche 1 bis 7, **dadurch gekennzeichnet, daß** das Tragelement (12) haarnadelförmig ausgebildet ist, wobei seine beiden zueinander parallelen, nadelartigen Schenkel (52) durch einen Steg (54) einstückig miteinander verbunden sind.

9. Wischblatt nach Anspruch 8, **dadurch gekennzeichnet, daß** die von dem Steg (54) abgewandten anderen Enden der nadelartigen Schenkel (52) durch ein Haltelement (56) miteinander verbunden sind.

## Claims

1. Wiper blade (10) for windows of motor vehicles, having an elongate, rubber-elastic wiper strip (14) which can be placed against the window to be wiped and is arranged, essentially parallel to the longitudinal axis, on the one surface, facing the window, of a resilient supporting element (12), which is connected to a wiper arm (18) driven transversely to the longitudinal extent of the wiper blade and loaded towards the window, and the wiper blade (10) is provided with an incident flow surface (44 or 144) which extends in its longitudinal direction and essentially parallel to the window and faces the relative wind (46) and which, seen transversely to its longitudinal extent, encloses an acute angle (α) with the window, and furthermore the wiper strip (14 or 114) crosses the supporting element, in a plane perpendicular to the window, by way of a projection (36 or 136), and the incident flow surface (44 or 144) being formed on the elongate projection, which is parallel to the longitudinal axis of the supporting element (12), **characterized in that** the supporting element (12) is of band-like configuration, and the wiper strip (14) has a basic body (30), and **in that** the projection (36, 136) is connected to the basic body (30) via a relatively narrow connecting web (38) which remains between two mutually opposite, open-edge longitudinal grooves (40, 42) for the supporting element (12).

2. Wiper blade according to Claim 1, **characterized in that** the incident flow surface (44 or 144) is arranged on the wiper strip (14).

3. Wiper blade according to Claim 1 or 2, **characterized in that** the projection (36 or 136) is integrally formed on a brushing strip of the wiper strip (14 or 114).

4. Wiper blade according to Claim 3, **characterized in that** the projection (136) is extruded onto the brushing strip (34) of the wiper strip (114).

5. Wiper blade according to one of Claims 1 to 4, **characterized in that** the projection (136) consists of a different, in particular softer material than the brushing strip (34).

6. Wiper blade according to one of Claims 1 to 5, **characterized in that** the incident flow surface (44), as seen in cross section, has a hollow curvature facing the relative wind (46).

7. Wiper blade according to one of Claims 1 to 6, **characterized in that** the supporting element (12) is of multipart design.

8. Wiper blade according to one of Claims 1 to 7, **characterized in that** the supporting element (12) is of hairpin-shaped design with its mutually parallel, pin-like limbs (52) being connected to each other as a single piece by means of a web (54).

9. Wiper blade according to Claim 8, **characterized in that** the other ends of the pin-like limbs (52), which ends face away from the web (54), are connected to each other by a retaining element (56).

## Revendications

1. Raclette d'essuie-glace (10) pour vitres de véhicules automobiles, dans laquelle :
- une lame d'essuyage (14) allongée, élastique comme du caoutchouc et pouvant être appliquée sur la vitre à essuyer, est montée sur la face tournée vers la vitre d'un élément porteur (12) élastique qui peut être relié à un bras d'essuie-glace (18) entraîné perpendiculairement à la direction longitudinale de la raclette (10) et pouvant être chargé en direction de la vitre,
- la raclette (10) présente, s'étendant sur sa longueur et essentiellement parallèlement à la vitre, une surface d'écoulement (44 ou 144) qui fait face au vent de la vitesse (46) et qui, observée perpendiculairement à sa longueur fait avec la vitre un angle aigu (α),
- la lame d'essuyage (14 ou 114) présente un appendice (36 ou 136) traversant l'élément porteur dans un plan parallèle à la vitre et sur cet appendice allongé, parallèle à l'axe longitudinal de l'élément porteur (12) se trouve la surface d'écoulement (44 ou 144),
**caractérisée en ce que**
- l'élément porteur (12) a la forme d'une bande et la lame d'essuyage (14) présente un corps de base (30) qui est relié à l'appendice (36, 136) par une barrette de liaison (38), relativement étroite, subsistant entre deux rainures longitudinales (40, 42) qui se font face et sont ouvertes pour accueillir l'élément porteur (12).

2. Raclette d'essuie-glace selon la revendication 1,
**caractérisée en ce que**
la surface d'écoulement (44 ou 144) se trouve sur la lame d'essuyage (14).

3. Raclette d'essuie-glace selon la revendication 1 ou 2,
**caractérisée en ce que**
l'appendice (36, 136) est formé sur une barrette de rigidité de la lame d'essuyage (14, 114).

4. Raclette d'essuie-glace selon la revendication 3,
**caractérisée en ce que**
l'appendice (136) est extrudé sur la barrette de rigidité (34) de la lame d'essuyage (114).

5. Raclette d'essuie-glace selon l'une quelconque des revendications 1 à 4,
**caractérisée en ce que**
l'appendice (136) est composé d'un autre matériau que la barrette de rigidité (34), notamment un matériau plus souple.

6. Raclette d'essuie-glace selon l'une quelconque des revendications 1 à 5,
**caractérisée en ce que**
la surface d'écoulement (44), vue en coupe, présente une courbure en creux faisant face au vent de la vitesse (46).

7. Raclette d'essuie-glace selon l'une quelconque des revendications 1 à 6,
**caractérisée en ce que**
l'élément porteur (12) est en plusieurs parties.

8. Raclette d'essuie-glace selon l'une quelconque des revendications 1 à 7,
**caractérisée en ce que**
l'élément porteur (12) a la forme d'une épingle à cheveux dont les deux branches parallèles (52) en forme d'aiguilles sont réunies par une barrette (54) en formant une seule pièce.

9. Raclette d'essuie-glace selon la revendication 8,
**caractérisée en ce que**
les autres extrémités des branches (52) parallèles en forme d'aiguilles, situées à l'opposé de la barrette (54), sont reliées entre elles par un élément de maintien (56).
